# EUROPÄISCHE PATENTANMELDUNG

(11) **EP 3 656 500 A1**
(43) Veröffentlichungstag der Anmeldung: **27.05.2020**
(21) Anmeldenummer: 18207563.0
(22) Anmeldetag: 21.11.2018
(51) Int. Cl.: B23K 35/30, C22C 9/00, B33Y 70/00, B23K 26/342, B23K 35/02

(54) **LASERSCHWEISSEN UND LASER-ADDITIVE VERARBEITUNG VON REINKUPFER**

(71) Anmelder: Siemens Aktiengesellschaft, 80333 München (DE)
(72) Erfinder: Kamps, Tobias, 80538 München (DE)

(57) **Zusammenfassung**

Die Erfindung betrifft ein Stoffgemisch, das mindestens 99,0 Gew.-% Kupfer bezogen auf das Stoffgemisch und eine Boridverbindung als Absorber für die Absorption elektromagnetischer Strahlung aufweist. Bei der Boridverbindung handelt es sich vorzugsweise um Lanthanborid, insbesondere Lanthanhexaborid. Die Erfindung betrifft des Weiteren die Verwendung eines solchen Stoffgemisches beim Laserstrahlschweißen oder einem additiven Fertigungsverfahren.

## Beschreibung

Die Erfindung betrifft ein Stoffgemisch, das überwiegend Kupfer aufweist und sich zum Einsatz im Laserstrahlschweißen oder in additiven Fertigungsverfahren gut eignet.

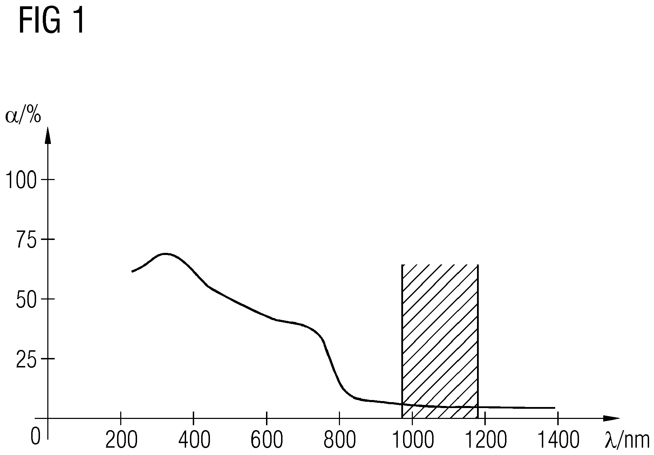

Es besteht der Wunsch, Reinkupfer in laser-basierten Verfahren wie beispielsweise Laserstrahlschweißen oder additiven Fertigungsverfahren zu verwenden. Die Verarbeitung von Reinkupfer in laser-basierten Verfahren wird allgemein dadurch erschwert, dass Kupfer in den Wellenlängen typischer Lasersysteme, wie beispielsweise Neodym-dotierter Yttrium-Aluminium-Granat-Laser (Nd:YAG-Laser), einen kleinen Absorptionsgrad aufweist. Ein Nd:YAG-Laser ist ein Festkörperlaser, der als aktives Medium einen Neodym-dotierten YAG-Kristall verwendet und meist infrarote Strahlung mit der Wellenlänge 1064 nm emittiert. Der Absorptionskoeffizient von Kupfer im Wellenlängenbereich 960 nm bis 1160 nm ist jedoch im Vergleich zum Absorptionskoeffizient im Bereich des blauen, sichtbaren Lichts (400 nm bis 500 nm) gering, siehe Fig. 1. Um Reinkupfer mittels Laserbestrahlung zum Schmelzen zu bringen, wie es beim Laserstrahlschweißen oder additiven Fertigungsverfahren nötig ist, ist eine ausreichend große Absorption der von dem Laser auf das Reinkupfer beaufschlagten elektromagnetischen Strahlung notwendig.

Ein erster Ansatz zur Lösung dieses Problems besteht darin, Laser zu verwenden, die in einem anderen, nämlich kurzwelligeren Spektralbereich emittieren. In diesem Zusammenhang werden derzeit die Entwicklung und Kommerzialisierung sogenannter "grüner" Laser vorangetrieben. Ein grüner Laser kann z.B. mittels eines frequenzverdoppelten Nd:YAG-Lasers realisiert werden, der elektromagnetische Strahlung bei 532 nm emittiert. Nachteilig ist jedoch, dass grüne Laser normalerweise nur in geringen Leistungen verfügbar sind (bis 1 kW). Des Weiteren sind grüne Laser derzeit noch relativ teuer.

Ein zweiter Ansatz zur Lösung des Problems, Kupfer für laser-basierte Verfahren verwendbar zu machen, ist der Einsatz von Kupferlegierungen anstatt von Reinkupfer. Kupfer lässt sich bekanntermaßen mit vielen verschiedenen Zusätzen legieren, d.h. vermischen. Wichtige Legierungsfamilien von Kupfer sind z.B. Kupfer-Zink (auch als Messing bezeichnet), Kupfer-Zinn (Zinnbronze), Kupfer-Aluminium, Kupfer-Nickel, Kupfer-Nickel-Zinn (Neusilber) oder Kupfer-Zinn-Zink (Rotguss). Selbst bei niedriglegierten Kupferwerkstoffen, bei denen der Anteil der Nicht-Kupfer-Bestandteile weniger als 5 Gew.-% bezogen auf die Legierung beträgt, besteht jedoch der Nachteil, dass die Kupferlegierung eine im Vergleich zu Reinkupfer deutlich reduzierte thermische und elektrische Leitfähigkeit aufweist. Folglich sind Kupferlegierungen, selbst wenn der Anteil an Nicht-Kupfer-Bestandteilen gering ist, für laser-basierte Verfahren ungeeignet.

Die Aufgabe der vorliegenden Erfindung besteht somit darin, ein Konzept zu entwickeln, Reinkupfer für die genannten laser-basierten Verfahren verwendbar zu machen, ohne die Nachteile der bekannten Ansätze in Kauf nehmen zu müssen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Die Erfindung bezieht sich auf ein Stoffgemisch, das mindestens 99,0 Gew.-% Kupfer bezogen auf das Stoffgemisch und eine Boridverbindung als Absorber für die Absorption elektromagnetischer Strahlung aufweist.

Es gibt in der Literatur unterschiedliche Schwellwerte für den Kupferanteil, ab dem ein Stoffgemisch als "Reinkupfer" bezeichnet wird. Im Rahmen dieser Patentanmeldung wird ein Stoffgemisch, das mindestens 99,0 Gew.-% Kupfer bezogen auf das Stoffgemisch enthält, als "Reinkupfer" bezeichnet.

Ein wesentlicher Aspekt der Erfindung besteht darin, einen Absorber in dem erfindungsgemäßen Stoffgemisch vorzusehen. Die Funktion des Absorbers ist, elektromagnetische Strahlung bestmöglich, also zu einem möglichst großen Anteil, zu absorbieren. Der Anteil des Absorbers am Stoffgemisch ist sehr gering, nämlich maximal 1,0 Gew.-% bezogen auf das Stoffgemisch. Dies hat einerseits die Folge, dass er keine Legierung mit Kupfer eingeht und somit die thermischen und elektrischen Eigenschaften des Kupfers nicht signifikant beeinträchtigt. Andererseits ist der sehr geringe Anteil des Absorbers im Stoffgemisch ausreichend, um das Kupfer in der Umgebung des Absorbers zu erwärmen. Als Folge davon findet eine (indirekte) Erwärmung des gesamten Stoffgemisches statt.

Bei entsprechend intensiver Bestrahlung der elektromagnetischen Strahlung ist es möglich, dass der Absorber schmilzt. Die Fähigkeit, die absorbierte Wärme an die Umgebung abzugeben und damit indirekt das gesamte Stoffgemisch zu erwärmen, ist damit aber weiterhin gegeben.

Der Absorber kann auch als "Nano-Heater" bezeichnet werden.

In einer Ausführungsform der Erfindung weist das Stoffgemisch mindestens 99,90 Gew.-% Kupfer bezogen auf das Stoffgemisch, insbesondere mindestens 99,98 Gew.-% Kupfer bezogen auf das Stoffgemisch, auf.

Vorteilhafte Boridverbindungen für den Absorber sind Aluminium-, Lanthan-, Yttrium-, Europium-, Zirkon-, Calcium-, Titan- und Magnesiumboridverbindungen. Besonders bevorzugt sind dabei Lanthanboridverbindungen, insbesondere Lanthanhexaborid (LaB₆). Lanthanhexaborid ist eine anorganische Verbindung aus Bor und Lanthan und hat einen Schmelzpunkt von 2210 °Celsius. Wird der aus dem Stoffgemisch gefertigte Formkörper pulvermetallurgisch hergestellt, kann die Boridverbindung einfach als Pulver dem pulverförmigen Kupfer hinzugefügt werden. Die pulverförmige Boridverbindung und das pulverförmige Kupfer können dann derart vermischt werden, dass eine im Wesentlichen homogene Mischung entsteht. Die Mischung kann anschließend zu dem gewünschten Formköper verarbeitet werden. Hierfür sind entsprechende Verfahren dem Fachmann bekannt, z.B. die Verdichtung mittels Presswerkzeuge zu einem Grünling und anschließende Sinterung. Der Absorber weist in diesem Fall vorzugsweise Partikelgrößen zwischen 50 nm und 200 nm auf.

Alternativ kann die Boridverbindung auch bereits während der schmelzmetallurgischen Raffination dem Kupfer beigefügt werden. Auch hier verteilt sich die Boridverbindung vorteilhafterweise im Wesentlichen homogen in der Schmelze. Der Absorber weist im Fall der schmelzmetallurgischen Hinzugabe vorzugsweise Partikelgrößen zwischen 10 µm und 50 µm auf.

Die pulver- oder schmelzmetallurgische Hinzugabe des Absorbers zum Kupfer kann auch als Anmischung oder Dotierung des Kupfers bezeichnet werden.

Das Stoffgemisch kann beispielsweise beim Laserstrahlschweißen eingesetzt werden. Das Laserstrahlschweißen, das auch als "Laserschweißen" bezeichnet wird, ist ein Schweißverfahren, bei der die Energiezuführung über einen Laser erfolgt. Es wird vor allem zum Verschweißen von Bauteilen eingesetzt, die mit hoher Schweißgeschwindigkeit, schmaler und schlanker Schweißnahtform und mit geringem thermischem Verzug gefügt werden müssen. Das Laserstrahlschweißen wird in der Regel ohne einen Zusatzwerkstoff ausgeführt.

Das erfindungsgemäße, Absorber enthaltende Reinkupfer ist, im Gegensatz zu herkömmlichem Reinkupfer, sehr gut für Laserstrahlschweißen mit einem langwelligen Laser mit einer Wellenlänge im Bereich von 960 nm bis 1160 nm geeignet. Die Absorberpartikel im Reinkupfer absorbieren einen signifikanten Anteil der auftreffenden elektromagnetischen Strahlung. Dadurch erwärmen sich die Absorber und geben einen Großteil der Wärme an das sie umgebende Kupfer ab. Als Folge erwärmt sich das gesamte Stoffgemisch und kann sich dadurch mit einem weiteren Stoff, mit dem es in Kontakt steht, verschweißen.

Das erfindungsgemäße Stoffgemisch kann auch bei additiven Fertigungsverfahren eingesetzt werden. Additive Fertigungsverfahren (*englisch: Additive Manufacturing*), auch als 3D-Druckverfahren bezeichnet, sind Fertigungsverfahren, bei dem Material Schicht für Schicht aufgetragen wird und somit dreidimensionale Gegenstände erzeugt werden. Der schichtweise Aufbau des Gegenstands erfolgt computergesteuert aus einem oder mehreren Werkstoffen nach vorgegebenen Maßen und Formen.

Ein additives Fertigungsverfahren, wofür das erfindungsgemäße, Absorber enthaltende Reinkupfer vorteilhafterweise eingesetzt werden kann, ist das selektive Laserschmelzen (*englisch: Selective Laser Melting*). Dafür wird das mit Absorbern versehene Reinkupfer in Pulverform in einer dünnen Schicht auf einer Grundplatte aufgebracht. Das pulverförmige Stoffgemisch wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut mit Absorbern versehenes Reinkupfer in Pulverform aufgetragen. Dieser Zyklus wird solange wiederholt, bis alle Schichten umgeschmolzen sind. Das fertige Bauteil wird vom überschüssigen Pulver gereinigt, nach Bedarf bearbeitet oder sofort verwendet.

Ein weiteres additives Fertigungsverfahren, für das das erfindungsgemäße Stoffgemisch vorteilhafterweise verwendet werden kann, ist das drahtbasierte Laserauftragschweißen (*englisch: Wire-based laser metal deposition*). Im Gegensatz zu pulverbasierten Verfahren wird beim drahtbasierten Laserauftragschweißen Draht mit einem Laser aufgeschmolzen und schichtweise gezielt auf einer Bauteiloberfläche aufgebracht. Das drahtbasierte Laserauftragschweißen kann mit einem herkömmlichen Draht aus Reinkupfer prozesstechnisch nicht effizient mit langwelligen Lasern mit einer Wellenlänge im Bereich von 960 nm bis 1160 nm betrieben werden, da herkömmliches Reinkupfer elektromagnetische Strahlung dieser Wellenlänge kaum, d.h. zu weniger als 10%, absorbiert. Wird jedoch ein mit Absorbern aus einer Boridverbindung versehenes Reinkupfer verwendet, erhöht sich die Absorption des Reinkupfers signifikant, so dass ein solcher Draht auch für ein Laserauftragschweißen mit langwelligem Laser geeignet ist.

Durch die Verwendung des erfindungsgemäßen Stoffgemisches können also Bauteile aus Reinkupfer mittels laser-basierter Verfahren hergestellt werden. Insbesondere sind dadurch auch kleine Losgrößen wirtschaftlich herstellbar. Ebenso erscheint die Fertigung von Elektromotoren mit neuartigen Geometrien mit der Möglichkeit der Effizienzsteigerung des Gesamtmotors aufgrund neuartiger Wicklungsgeometrien möglich.

Auch müssen bestehende Prozessierungsanlagen mit einem langwelligen Nd:YAG-Laser für die Prozessierung von Reinkupfer nicht aufwändig umgerüstet werden, sondern können wie bisher verwendet werden, wenn das Reinkupfer mit den Absorbern versehen wird.

Nachfolgend wird die Erfindung bzw. die der Erfindung zugrundeliegende Problemstellung unter Bezugnahme auf die angehängte Zeichnung beschrieben, in der
Fig. 1 die wellenlängenabhängige Absorption von Kupfer darstellt.

Die Fig. 1 ist eine Adaption einer entsprechenden Abbildung aus dem von K. Sugioka, M. Meunier und A. Piqué herausgegebenen Buch "Laser Precision Microfabrication", erschienen 2010 im Springer Verlag. Sie zeigt schematisch die Absorption (auf der Ordinate, in Prozent) elektromagnetischer Strahlung durch Kupfer im Bereich von ca. 200 nm bis 1400 nm. Wie zu sehen ist, liegt die Absorption im Bereich grüner Laser, also im Wellenlängenbereich 510 nm bis 560 nm, bei etwa 40% bis 50%. Kupfer kann also mit einem grünen Laser sehr effizient zum Schmelzen gebracht werden. Für Wellenlängen im Bereich 960 nm bis 1160 nm, der in der Fig. 1 schraffiert ist, beträgt die Absorption jedoch nur weniger als 10%. Für diejenigen Wellenlängen, die beispielsweise mit kostengünstigen Nd:YAG-Lasern realisiert werden können, ist eine Erwärmung und Schmelzen von Kupfer nur deutlich ineffizienter, wenn überhaupt, möglich.

Die Erfindung besteht darin, die Absorptionsfähigkeit von Reinkupfer zumindest im prozesstechnologisch interessanten Bereich von 960 nm bis 1160 nm signifikant zu erhöhen. Dies wird durch das Vorsehen von Borverbindungen als Absorber im Reinkupfer ermöglicht. Schon kleinste Mengen, d.h. weniger oder gleich 1,0 Gew.-% Absorber bezogen auf das Stoffgemisch, insbesondere weniger oder gleich 0,1 Gew.-% Absorber bezogen auf das Stoffgemisch, erzielen den genannten Effekt der signifikanten Erhöhung der Absorption der elektromagnetischen Strahlung.

## Patentansprüche

1. Stoffgemisch, **dadurch gekennzeichnet, dass** es mindestens 99,0 Gew.-% Kupfer bezogen auf das Stoffgemisch und eine Boridverbindung als Absorber für die Absorption elektromagnetischer Strahlung aufweist.

2. Stoffgemisch nach Anspruch 1,
wobei das Stoffgemisch mindestens 99,90 Gew.-%, insbesondere mindestens 99,98 Gew.-%, Kupfer bezogen auf das Stoffgemisch aufweist.

3. Stoffgemisch nach einem der vorhergehenden Ansprüche, wobei es sich bei der Boridverbindung um Lanthanborid handelt.

4. Stoffgemisch nach einem der vorhergehenden Ansprüche, wobei es sich bei der Boridverbindung um Lanthanhexaborid handelt.

5. Stoffgemisch nach einem der vorhergehenden Ansprüche,
wobei die Boridverbindung Partikelgrößen von 50 nm bis 200 nm aufweist.

6. Stoffgemisch nach einem Ansprüche 1 bis 4,
wobei die Boridverbindung Partikelgrößen von 10 µm bis 50 µm aufweist.

7. Stoffgemisch nach einem der vorhergehenden Ansprüche,
wobei der Absorber im Wesentlichen homogen im Stoffgemisch verteilt ist.

8. Verwendung eines Stoffgemisches nach einem der vorhergehenden Ansprüche beim Laserstrahlschweißen.

9. Verwendung eines Stoffgemisches nach einem der Ansprüche 1 bis 7 bei der Herstellung eines Gegenstandes mittels eines additiven Fertigungsverfahrens.

10. Verwendung eines Stoffgemisches nach Anspruch 9, wobei das Stoffgemisch in einem Draht enthalten ist und dieser für ein drahtbasiertes Laserauftragsschweißen verwendet wird.

11. Verwendung eines Stoffgemisches nach einem der Ansprüche 1 bis 7, wobei das Stoffgemisch mit einem Laser mit einer Wellenlänge im Bereich von 960 nm bis 1160 nm bestrahlt wird.
